# EUROPEAN PATENT APPLICATION

(11) **EP 1 223 060 A2**
(43) Date of publication of application: **17.07.2002**
(21) Application number: 02000894.2
(22) Date of filing: 15.01.2002
(51) Int. Cl.: B60H 1/32

(54) **Controller and method for controlling compressor of vehicle air conditioner**

(30) Priority: 16.01.2001 JP 2001007815
(71) Applicant: Kabushiki Kaisha Toyota Jidoshokki, Kariya-shi, Aichi-ken (JP)
(72) Inventor: Murase, Masakazu, Kariya-shi, Aichi-ken (JP); Yokomachi, Naoya, Kariya-shi, Aichi-ken (JP); Yamada, Takeshi, Kariya-shi, Aichi-ken (JP)
(74) Representative: Leson, Thomas Johannes Alois, Dipl.-Ing.

(57) **Abstract**

A controller (70) for improving the durability of a compressor employed in a vehicle air conditioner without decreasing engine fuel efficiency. The controller detects the driving conditions of the vehicle and determines whether the engine (E) is in a reversely driven state, in which vehicle wheels (W) drive the engine instead of the engine driving the wheels. The controller increases the amount of refrigerant discharged from the compressor when the engine is in the reversely driven state.

## Description

The present invention relates to a controller and a method for controlling a compressor of a vehicle air conditioner.

A compressor employed in the air conditioner of a vehicle is driven by the engine of the vehicle. A clutch-incorporating compressor is connected to the engine by a clutch mechanism. A clutchless compressor, which does not incorporate a clutch mechanism, is connected to the engine without a clutch mechanism.

A clutch-incorporating compressor is powered by the engine when the clutch mechanism connects the compressor to the engine. This causes the compressor to compress a refrigerant. The compressor stops compressing the refrigerant when the clutch mechanism disconnects the compressor from the engine.

The displacement of a typical clutchless compressor is variable. Such a compressor adjusts the pressure in its crank chamber to vary the displacement. When cooling is not required, the clutchless compressor causes its displacement to become a minimum. The minimum displacement is almost zero, to reduce the load applied to the engine by the compressor. If the compressor were connected to an external refrigerant circuit in this state, the amount of refrigerant flowing through the circuit would decrease. This would decrease the amount of lubricant oil included in the refrigerant that is drawn into the compressor from the circuit. Therefore, the compressor stops circulating the refrigerant through the external refrigerant circuit when the displacement of the compressor is minimized. Further, an internal refrigerant circuit, extending from a discharge chamber, the crank chamber, a suction chamber, compression chambers, and back to the discharge chamber, is formed in the compressor. The lubricating oil included in the refrigerant circulating through the internal refrigerant circuit lubricates moving parts of the compressor in a satisfactory manner.

When an air conditioner switch is turned on to cool the passenger compartment, the compressor starts a cooling operation. However, the compressor does not perform the cooling operation when the air conditioner switch is not turned on for a long'period when cooling is not needed, such as during the winter or during the nighttime. In other words, the compressor does not function for a long period of time. In the clutch-incorporating compressor, this state corresponds to when the compressor is disconnected from the engine by the clutch mechanism. In the clutchless compressor, this state corresponds to when the displacement is minimized.

If the clutch-incorporating compressor does not function for a long period of time, a large amount of refrigerant would be liquefied in the compressor. In such case, when the compressor starts to function, the compressor would discharge the liquefied refrigerant and the lubricating oil into the external refrigerant circuit in a sudden manner (a phenomenon referred to a liquid washout). As a result, the lubrication of the moving parts in the compressor may become unsatisfactory.

If the clutchless compressor does not function for a long period of time, refrigerant would continue to circulate through the internal refrigerant circuit for a long time. This would increase the temperature of the circulating refrigerant and lubricating oil.

In this manner, if the compressor does not function for a long period of time, the durability of the compressor would be affected. To solve this problem, the clutch-incorporating compressor may be periodically activated by connecting the compressor to the engine with the clutch mechanism regardless of whether the air conditioner switch is turned on or off. This would prevent liquefied refrigerant from collecting in the compressor. Further, the clutchless compressor may be periodically connected to the external refrigerant circuit to increase the displacement from the minimum displacement state, regardless of whether the air conditioner switch is turned on or off. This would discharge the hot refrigerant and lubricating oil from the compressor and prevent the interior of the compressor from becoming too hot.

However, when the air conditioner switch is turned off (i.e., a state in which cooling is not necessary), the activation of the clutch-incorporating compressor or the increase in the displacement of the clutchless compressor would increase the load applied to the engine. In other words, an increase in the amount of refrigerant discharged from the compressor per unit time would lower the fuel efficiency (energy efficiency) of the engine.

It is an object of the present invention to provide a controller that improves the durability of a vehicle air conditioner compressor without decreasing the fuel efficiency of the engine.

To achieve the above object, the present invention provides a controller of a compressor for a vehicle air conditioner. The compressor is driven by a power source that drives wheels of a vehicle. The controller includes a detecting means for detecting a driving condition of the vehicle. A determining means determines whether the power source is in a reversely driven state, in which the wheels drive the power source instead of the power source driving the wheels, based on the driving conditions detected by the detecting means. A controlling means increases the amount of refrigerant discharged from the compressor per unit time when the determining means determines that the power source is in the reversely driven state.

A further perspective of the present invention is a method for controlling a compressor of a vehicle air conditioner. The compressor is driven by a power source that drives wheels of a vehicle. The method includes detecting a driving condition of the vehicle, determining whether the power source is in a reversely driven state, in which the wheels drive the power source instead of the power source driving the wheels, based on the driving conditions detected in the detecting step, and increasing the amount of refrigerant discharged from the compressor per unit time when the power source is in the reversely driven state.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a cross-sectional view showing a variable displacement compressor, in a state in which the displacement is maximal, according to a first embodiment of the present invention;
Fig. 2 is a cross-sectional view showing the compressor of Fig. 1 in a state in which the displacement is minimal;
Fig. 3 is a cross-sectional view showing a control valve incorporated in the compressor of Fig. 1;
Fig. 4 is a flow chart illustrating a routine for controlling the compressor of Fig. 1;
Fig. 5 is a schematic diagram showing a second embodiment according to the present invention; and
Fig. 6 is a flow chart illustrating a routine for controlling a compressor in the second embodiment.

A controller of a compressor employed in a vehicle air conditioner according to a first embodiment and a second embodiment of the present invention will now be discussed. In the description of the second embodiment, only the parts differing from the first embodiment will be described. In the drawings, like numerals are used for like elements throughout.

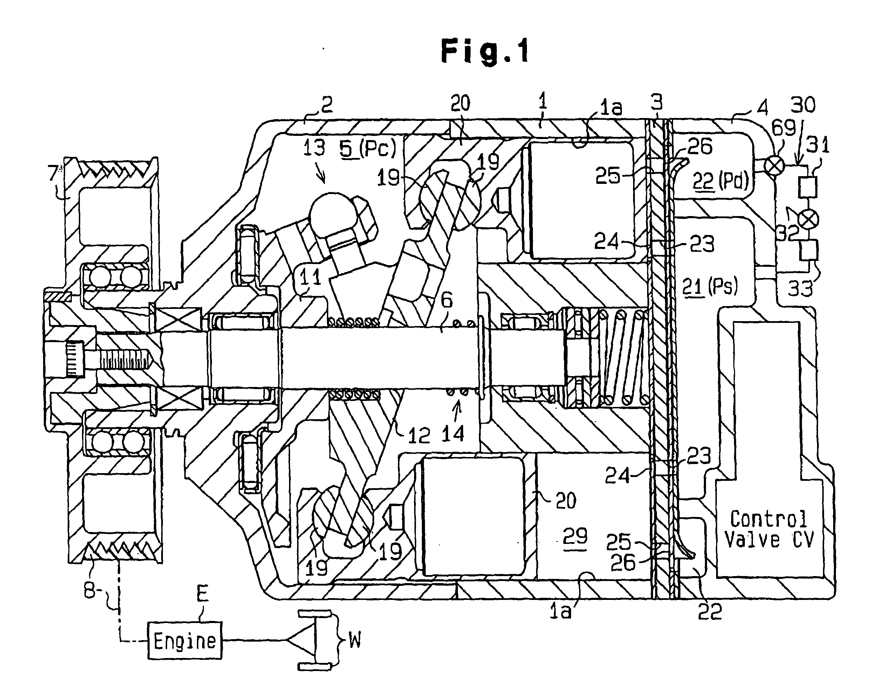

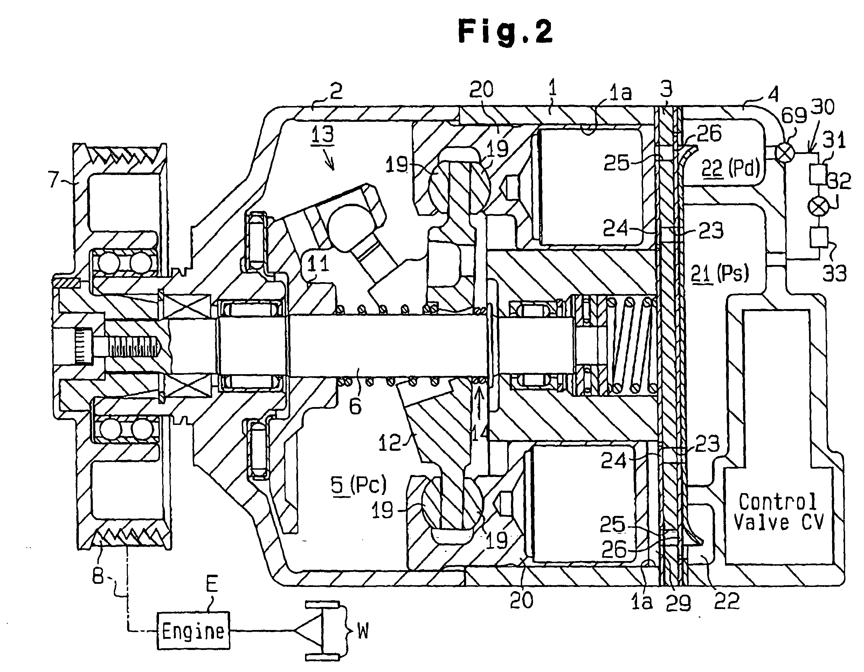

As shown in Figs. 1 and 2, a clutchless compressor, the displacement of which is variable, includes a cylinder block 1, a front housing 2 fixed to a front end of the cylinder block 1, and a rear housing 4 fixed to a rear end of the cylinder block 1 with a valve plate 3 arranged in between.

A crank chamber 5 is defined in the front housing 2 in front of the cylinder block 1. A drive shaft 6 is rotatably arranged in the crank chamber 5. The drive shaft 6 is directly connected to a power source of the vehicle, or an engine E, by a power transmission mechanism, which includes a pulley 7 and a belt 8. In other words, the drive shaft 6 is connected to the engine E without a clutch mechanism, such as an electromagnetic clutch. Accordingly, the engine E constantly rotates the drive shaft 6 when the engine E is running.

Accordingly, an electromagnetic clutch, which is expensive and heavy, is not arranged in the power transmission train between the compressor and the engine E. This reduces the cost of the compressor and makes the compressor light. Further, shocks that would be produced when the electromagnetic clutch is activated or deactivated are not produced. This improves the drivability of the vehicle.

A lug plate 11 is fixed to the drive shaft 6 in the crank chamber 5 so that the lug plate 11 rotates integrally with the drive shaft 6. A swash plate 12 is accommodated in the crank chamber 5. The swash plate 12 is supported so that it is movable and inclinable on the drive shaft 6. A hinge mechanism 13 is arranged between the lug plate 11 and the swash plate 12. The hinge mechanism 13 integrally rotates with the lug plate 11 and the swash plate 12 and inclines the swash plate 12 relative to the drive shaft 6 as the swash plate 12 moves in the axial direction of the drive shaft 6.

A plurality of cylinder bores 1a extends through the cylinder block 1 about the drive shaft 6. A single-headed piston 20 is reciprocally retained in each cylinder bore 1a. The pisLon 20 closes one side of the cylinder bore 1a and the valve plate 3 closes the other side of the cylinder bore 1a. A compression chamber 29 is defined in the cylinder bore 1a between the piston 20 and the valve plate 3. The volume of the compression chamber 29 varies as the piston 20 reciprocates in the cylinder bore 1a. The piston 20 is engaged to a peripheral portion of the swash plate 12 by shoes 19. The rotation of the swash plate 12 is converted to the reciprocation of the piston 20.

A suction chamber 21 and a discharge chamber 22 are defined between the valve plate 3 and the inner wall of the rear housing 4. A suction port 23, a suction valve 24, a discharge port 25, and a discharge valve 26 are formed in correspondence with each cylinder bore 1a in the valve plate 3. When each piston 20 moves from its top dead center position to its bottom dead center position, refrigerant gas is drawn into the associated compression chamber 29 from the suction chamber 21 through the corresponding suction port 23 and suction valve 24. When the piston 20 moves from the bottom dead center position to the top dead center position, the refrigerant gas drawn into the compression chamber 29 is compressed to a predetermined pressure and discharged into the discharge chamber 22 through the corresponding discharge port 25 and discharge valve 26.

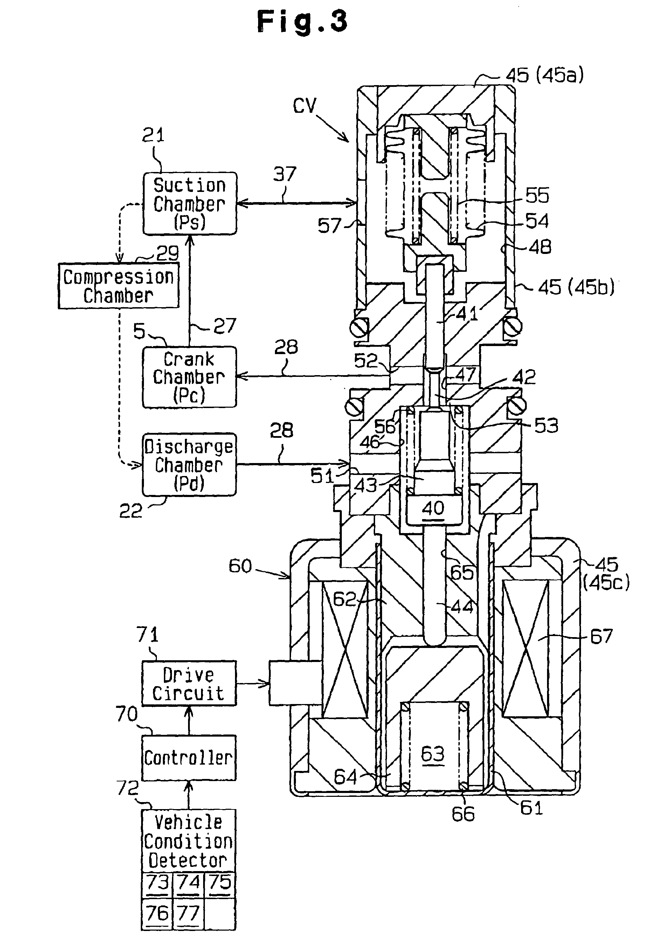

Referring to Fig. 3, a crank chamber pressure control mechanism includes a bleeding passage 27, a gas supply passage 28, and a control valve CV, which are arranged in the compressor. The crank chamber pressure control mechanism controls the pressure of the crank chamber 5 (crank chamber pressure Pc) to adjust the inclination of the swash plate 12. The bleeding passage 27 connects the crank chamber 5 and the suction chamber 21. The gas supply passage 28 connects the discharge chamber 22 and the crank chamber 5. The control valve CV is arranged in the gas supply passage 28. The pressure of the suction chamber 21 is defined as the suction pressure Ps, and the pressure of the discharge chamber 22 is defined as the discharge pressure Pd.

The opened degree of the control valve CV is adjusted to control the balance between the amount of high pressure gas drawn into the crank chamber 5 through the gas supply passage 28 and the amount of gas discharged from the crank chamber 5 through the bleeding passage 27. This determines the crank chamber pressure Pc. The difference between the crank chamber pressure Pc and the pressure of the compression chambers 29 depends on the pressure of the crank chamber pressure Pc. This alters the inclination of the swash plate 12 (i.e., the angle between the swash plate 12 and a hypothetical plane perpendicular to the drive shaft 6) and varies the stroke of the pistons 20, or the displacement of the compressor (i.e., the amount of refrigerant discharged per rotation of the drive shaft).

For example, if the opened degree of the control valve CV decreases, the crank chamber pressure Pc decreases. This decreases the difference between the crank chamber pressure Pc and the pressure of the compression chambers 29 and increases the inclination of the swash plate 12. As a result, the displacement of the compressor increases. In the state shown in Fig. 1, the inclined swash plate 12 is in contact with the lug plate 11. In this state, the swash plate 12 is arranged at a maximum inclination position, and the displacement of the compressor is maximal.

On the other hand, if the opened degree of the control valve CV increases, the difference between the crank chamber pressure Pc and the pressure of the compression chambers 29 increases. This decreases the inclination of the swash plate 12 and decreases the displacement of the compressor. In the state shown in Fig. 2, the swash plate 12 is in contact with a stopper 14, which is arranged on the drive shaft 6. In this state, the swash plate 12 is arranged at a minimum inclination position, and the displacement of the compressor is minimal. Further, the angle of the swash plate 12 when located at the minimum inclination position is close to zero degrees (e.g., two to five degrees).

Referring to Figs. 1 and 2, a refrigerant circuit (refrigeration cycle) of the vehicle air conditioner is formed by the compressor and an external refrigerant circuit 30. The external refrigerant circuit 30 includes a condenser 31, an expansion valve 32, and an evaporator 33. Carbon dioxide is employed as the refrigerant.

A shutting valve 69 is arranged in a refrigerant passage between the discharge chamber 22 of the compressor and the condenser 31 of the external refrigerant circuit 30. The shutting valve 69 shuts the refrigerant passage when the discharge pressure Pd is lower than a predetermined shutting value to stop refrigerant from circulating through the external refrigerant circuit 30.

The shutting valve 69 may be a differential pressure valve operated when mechanically detecting the pressure difference between the upstream and downstream sides of the valve. Alternatively, the shutting valve 69 may be an electromagnetic valve controlled by a controller 70 (not shown in Figs. 1 and 2). The shutting valve 69 may also be a valve mechanically operated when the swash plate 12 is arranged at the minimum inclination position.

Referring to Fig. 3, the upper half of the control valve CV defines a valve portion, and the lower half of the control valve CV defines a solenoid portion 60. The valve portion adjusts the opened degree (throttling amount) of the gas supply passage 28, which connects the discharge chamber 22 and the crank chamber 5. The solenoid portion 60 is an electromagnetic actuator, which biases an actuation element 40 arranged in the control valve CV, based on a signal from an external device. The actuation element 40 includes a support rod 41, a connection rod 42, a valve body 43, and a guide rod 44.

The control valve CV has a valve housing 45 that includes a cap 45a, a valve portion shell 45b, and a solenoid portion shell 45c. A valve chamber 46 and a communication passage 47 are defined in the valve portion shell 45b. A pressure sensing chamber 48 is also defined in the valve portion shell 45b, the upper end of which is sealed by the cap 45a.

The actuation element 40 extends through the valve chamber 46 and the communication passage 47 and is movable in its axial direction (the vertical direction as viewed in Fig. 3). The valve chamber 46 and the communication passage 47 may be connected to each other depending on the position of the actuation element 40. The communication passage 47 and the pressure sensing chamber 48 are disconnected from each other by the support rod 41 of the actuation element 40, which is fitted in the communication passage 47.

The bottom of the valve chamber 46 is defined by the top surface of a fixed steel core 62. A first port 51 extends radially through the wall of the valve housing 45 from the valve chamber 46. The first port 51 connects the valve chamber 46 to the discharge chamber 22 by way of an upstream portion of the gas supply passage 28. A second port 52 extends radially through the wall of the valve housing 45 from the communication passage 47. The second port 52 connects the communication passage 47 to the crank chamber 5 by way of a downstream portion of the gas supply passage 28. Accordingly, the first port 51, the valve chamber 46, the communication passage 47, and the second port 52 form part of the gas supply passage 28, which connects the discharge chamber 22 and the crank chamber 5.

The valve body 43 of the actuation element 40 is arranged in the valve chamber 46. A valve body spring 56 is accommodated in the valve chamber 46 to bias the valve body 43 downward. A valve seat 53 is defined at the boundary between the valve chamber 46 and the communication passage 47. when the actuation element 40 moves from the position shown in the state of Fig. 3 (lowermost position) to an uppermost position at which the valve body 43 contacts the valve seat 53, the valve body 43 closes the communication passage 47. In other words, the valve body 43 of the actuation element 40 adjusts the opened degree of the gas supply passage 28.

A bellows 54 is accommodated in the pressure sensing chamber 48. The upper end of the bellows 54 is fixed to the cap 45a of the valve housing 45. A bellows spring 55 is retained in the bellows 54 to bias and expand the bellows 54 in a downward direction. The downward biasing force of the bellows spring 55 presses the bellows 54 against the support rod 41.

The pressure sensing chamber 48 is connected to the suction chamber 21 through a pressure detection port 57, which extends through the valve portion shell 45b of the valve housing 45, and a pressure detection passage 37. In other words, the pressure Ps of the suction chamber 21 is transmitted to the pressure sensing chamber 48.

The solenoid portion 60 includes a retaining cylinder 61, which has a closed bottom. The fixed steel core 62 is fitted in the upper portion of the retaining cylinder 61. A solenoid chamber 63 is defined in the retaining cylinder 61. A movable steel core 64 is accommodated in the solenoid chamber 63 and is supported so that it is axially movable. A guide bore 65 extends axially through the center of the fixed steel core 62. The guide rod 44 of the actuation element 40 extends through the guide bore 65 and is supported so that it is axially movable.

A movable steel core spring 66 is accommodated in the solenoid chamber 63 to bias the movable steel core 64 toward the fixed steel core 62. Accordingly, the downward biasing force of the valve body spring 56 and the upward biasing force of the movable steel core spring 66 engage the guide rod 44 and the movable steel core 64 with each other. Thus, the movable steel core 64 and the actuation element 40 always move integrally in the upward and downward directions.

A coil 67 is wound about the fixed steel core 62 and the movable steel core 64. A vehicle condition detector 72 sends driving condition information to the controller 70, which, in turn, sends a command based on the information to a drive circuit 71. In response to the command, the drive circuit 71 provides the coil 67 with a drive signal or a current. The coil 67 generates an electromagnetic attraction force (electromagnetic biasing force) based on the drive signal, or the amount of supplied current, between the movable steel core 64 and the fixed steel core 62. The current supplied to the coil 67 is controlled by adjusting the voltage applied to the coil 67. The applied voltage is controlled by performing pulse width modulation (PWM) control.

The vehicle condition detector 72 includes an air conditioner switch 73, a temperature setting device 74 for setting the temperature of the passenger's compartment, a temperature sensor 75 for detecting the temperature of the passenger's compartment, an acceleration pedal depression sensor 76 for detecting a depression amount Acc of an acceleration pedal (not shown), and an engine speed sensor 77 for detecting the speed Ne of the engine E.

The controller 70 serves as a determining means and a controlling means. Further, the acceleration pedal depression sensor 76 and the engine speed sensor 77 serve as detecting means.

The position of the actuation clement 40, or the opened degree of the control valve CV, is determined in the manner described below.

Referring to Fig. 3, the position of the actuation element 40 is determined by the downward biasing force of the bellows spring 55 and the valve body spring 56 when the coil 67 is not supplied with current (current duty ratio being 0%). In such state, the actuation element 40 is arranged at the lowermost position, and the valve body 43 fully opens the communication passage 47. Thus, the crank chamber pressure Pc takes the largest value possible under the present circumstance, and the difference between the crank chamber pressure Pc and the pressure of the compression chambers 29 increases. This moves the swash plate 12 toward the minimum inclination position and causes the displacement of the compressor to be minimal.

When the controller 70 detects a state in which cooling is not required, such as when the air conditioner switch 73 is turned off, or a state in which cooling is prohibited (a state in which a so-called acceleration cut request is issued), such as when the vehicle is suddenly accelerating, the controller 70 sends a minimizing command signal to the control valve CV to minimize the displacement of the compressor. In other words, the controller 70 sends a command to the drive circuit 71 to set the duty ratio of the supplied current at 0%.

Accordingly, the displacement of the compressor is minimized as shown in the state of Fig. 2. In the minimum displacement state, the pressure Pd of the discharge chamber 22 is lower than the predetermined shutting value. Thus, the shutting valve 69 closes and stops circulating refrigerant through the external refrigerant circuit 30. Further, the minimal inclination of the swash plate 12 is close to zero. When the displacement of the compressor is minimal, the compression chambers 29 continue to draw in refrigerant from the suction chamber 21, compress the refrigerant, and discharge the refrigerant into the discharge chamber 22.

Accordingly, an internal refrigerant circuit extending from the discharge chamber 22 to the gas supply passage 28, the crank chamber 5, the bleeding passage 27, the suction chamber 21, the compression chambers 29, and back to the discharge chamber 22 is formed in the compressor. Lubricating oil circulates through the internal refrigerant circuit with the refrigerant. Thus, the moving parts in the compressor (e.g., the pistons 20 that move in the cylinder bores la) are lubricated in a satisfactory manner even if refrigerant, which includes lubricating oil, does not return to the compressor from the external refrigerant circuit 30.

When the coil 67 of the control valve CV is supplied with current, the duty ratio of the current is included in a predetermined range. When the duty ratio of the current supplied to the coil 67 is the minimum value of the range, which is greater than 0%, the upward electromagnetic biasing force becomes greater than the downward biasing force of the bellows spring 55 and the valve body spring 56. This moves the actuation element 40 upward. In this state, the upward biasing force of the movable steel core spring 66 is added to the upward electromagnetic biasing force. Further, the downward biasing force of the bellows spring 55 and the valve body spring 56 is decreased by the upward biasing force of the bellows 54 that results from the suction pressure Ps of the pressure sensing chamber 48. The upward and downward forces counter each other and position the valve body 43 at a position where the two forces are balanced.

In other words, the control valve CV positions the actuation element 40 in accordance with the fluctuation of the suction pressure Ps to maintain the suction pressure Ps at a target value (target suction pressure), which is determined by the current duty ratio of the coil 67. Further, the target suction pressure may be adjusted by changing the current duty ratio.

Engine braking may be performed when the vehicle is, for example, being decelerated or being driven down a descent. In such state, the wheels W of the vehicle drive the engine E instead of the engine E driving the wheels W. Thus, the wheels W drive the compressor by way of the engine E. Such state is defined as a reversely driven state. In the first embodiment, when the engine E enters the reversely driven state, the controller 70 controls the compressor so that the compressor shifts from a minimum displacement state to a non-minimum displacement state. In other words, the controller 70 increases the displacement of the compressor based on various conditions of the vehicle, even if the air conditioner switch 73 is turned off and the compressor is thus in a minimum displacement state.

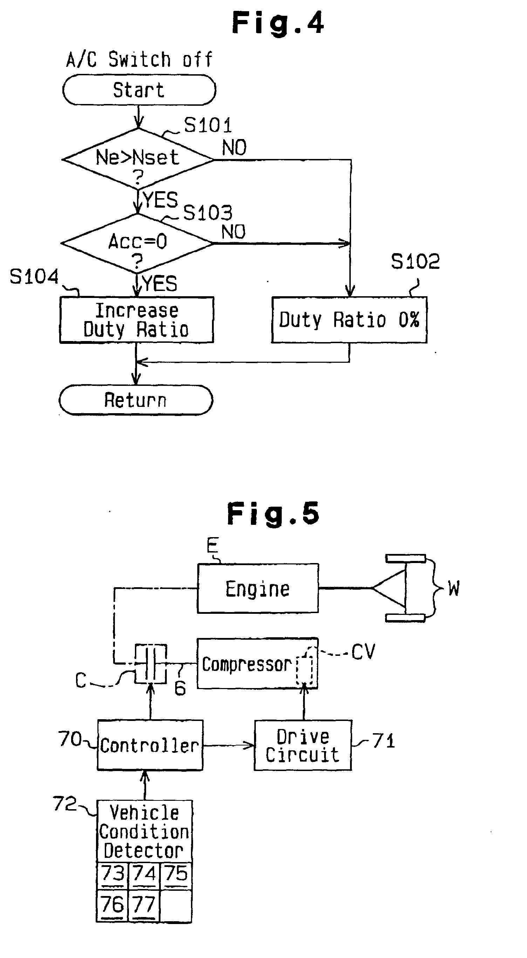

The controller 70 performs the routine of Fig. 4 when the air conditioner switch 73 is turned off and the compressor displacement is minimized. In step S101, the controller 70 determines whether the engine speed Ne, which is detected by the engine speed sensor 77, is greater than a prestored threshold value Nset. If the controller 70 determines that the engine speed Ne is not greater than the threshold value Nset in step S101, the rotating speed of the compressor drive shaft 6, which is driven by the engine E, is relatively low. Thus, the temperature increase of the refrigerant and lubricating oil circulating in the compressor is relatively low. In this case, the temperature in the compressor is not high, so the controller 70 proceeds to step S102. In step S102, the controller 70 controls the drive circuit 71 so that current is not supplied to the coil 67 of the control valve CV. In this case, the drive circuit 71 therefore continues to maintain the current duty ratio at 0%.

If the controller 70 determines that the engine speed Ne is greater than the prestored threshold value nset in step S101, the rotating speed of the compressor drive shaft 6 is high. Thus, the temperature in the compressor is high. In this case, the controller 70 proceeds to step S103 and determines whether the acceleration pedal depression amount Acc, which is detected by the acceleration pedal depression sensor 76, is null. If the controller 70 determines that the acceleration pedal depression amount Acc is not null in step S103, the engine E is being driven by the depression of the acceleration pedal. In other words, the engine E is not in a reversely driven state. In this case, the controller 70 proceeds to step S102 and maintains the duty ratio at 0%.

If the controller 70 determines that the acceleration pedal depression amount Acc is null in step S103, it is presumed that the vehicle is being decelerated or being driven down a descent. This indicates that the engine E is in a reversely driven state. In this case, the controller 70 proceeds to step S104 and increases the duLy ratio of the current supplied to the coil 67 from 0% to, for example, a median value in the range of the variable duty ratio.

Thus, the compressor shifts from a minimum displacement state to a non-minimum displacement state and increases its displacement. Further, the circulation of refrigerant through the external refrigerant circuit 30 is started. This discharges the refrigerant and lubrication oil, which was collected in the compressor, from the compressor and draws relatively cool refrigerant and lubricating oil into the compressor from the external refrigerant circuit 30. Accordingly, the interior of the compressor is prevented from becoming too hot. Thus, a state in which heat adversely affect the parts of the compressor does not occur. Further, the increase in the displacement of the compressor increases the amount of lubricating oil that circulates through the compressor. This lubricates the moving parts of the compressor in a satisfactory manner.

The first embodiment has the advantages described below.
(1) When the engine E is in a reversely driven state, the compressor shifts from a minimum displacement state to a non-minimum displacement state without increasing the amount of fuel consumed by the engine E. This prevents insufficient lubrication and overheating. Accordingly, the durability of the compressor is improved without decreasing the fuel efficiency of the engine E. Further, when the engine E is in a reversely driven state, the load torque applied to the engine E by the compressor increases. Thus, engine braking is effectively performed. Accordingly, the vehicle is effectively decelerated.
(2) The compressor displacement may be minimized in accordance with the cooling load even when the air conditioner switch 73 is turned on. However, the minimum displacement state does not continue for a long time when the passenger's compartment is being air-conditioned. Accordingly, the compressor does not have to shift from the minimum displacement state to the non-minimum displacement state when the engine E is in a reversely driven state. In the first embodiment, the air conditioner switch 73 must be turned off to shift the compressor from the minimum displacement state to the maximum displacement state when the engine E is in a reversely driven state. This avoids an increase in the electric power consumption and an increase in the operational load applied to the controller 70 that would occur when making unnecessary adjustments to the current duty ratio.
(3) When the air conditioner switch 73 is turned off and the engine E is in a reversely driven state, the compressor is always shifted from a minimum displacement state to a non-minimum displacement state. This improves the durability of the compressor. Further, this effectively decelerates the vehicle.
(4) The air conditioner employs carbon dioxide as the refrigerant. The pressure of carbon dioxide refrigerant is greater than the pressure of Freon refrigerant. Accordingly, when the compressor is in the minimum displacement state, the interior of the compressor has a tendency of becoming hotter than when using the Freon refrigerant. Accordingly, the above control that shifts the compressor from the minimum displacement state to the non-minimum displacement state is especially advantageous for improving the durability of a compressor that uses the carbon dioxide refrigerant.

With reference to Fig. 5, a compressor according to a second embodiment of the present invention has a clutch mechanism C, such as an electromagnetic clutch C, to connect the compressor to the engine E. The clutch mechanism C is arranged in the power transmission train between the compressor and the engine E. Further, the compressor is not provided with the shutting valve 69 that is used by the compressor of the first embodiment. When the air conditioner switch 73 is turned off, the controller 70 causes the clutch mechanism C to disconnect the compressor from the engine E and deactivate the compressor.

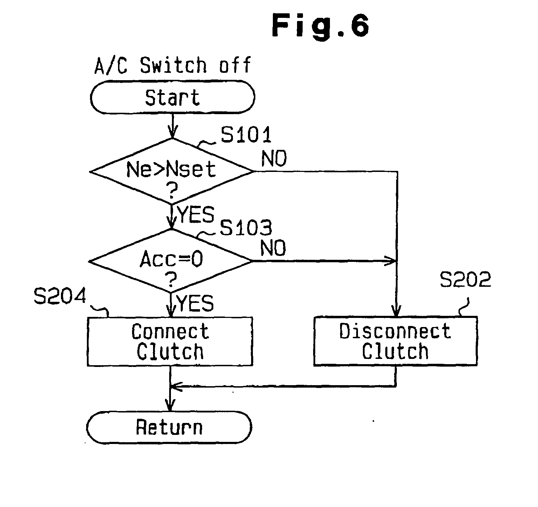

When the air conditioner switch 73 is turned off, the controller 70 executes a routine, which is illustrated in Fig. 6. The routine of Fig. 6 is similar to the routine performed in the first embodiment. The routine of the first embodiment differs from the routine of the second embodiment in that step S102 is replaced by step S204 and step S104 is replaced by step S204. If the controller 70 determines that the engine speed Ne is not greater than the threshold value Nset (the vehicle velocity being low) in step S101 or that the acceleration depression amount Acc is not null in step 5103, the engine E is not in the reversely driven state. In this case, the controller 70 proceeds to step S202. In step S202, the controller 70 causes the clutch mechanism C to disconnect the compressor from the engine E.

If the controller 70 determines that the engine speed Ne is higher than the threshold value Nset in step S101 and that the acceleration pedal depression amount Acc is null in step S103, the engine E is in the reversely driven state. In this case, the controller 70 proceeds to step S204. In step S204, the controller 70 connects the compressor to the engine E with the clutch mechanism C. The compressor does not discharge refrigerant when deactivated. Thus, when the compressor is connected with the engine E in step S204, the amount of the refrigerant discharged from the compressor is increased from a null state. Accordingly, the compressor is prevented from being kept deactivated for a long period of time even if the air conditioner switch 73 remains turned off for a long time. Thus, a large amount of liquefied refrigerant does not collect in the compressor, and the moving parts in the compressor are sufficiently lubricated.

It should be apparent to those skilled in the art that the present invention may be embodied in many other specific forms without departing from the spirit or scope of the invention. Particularly, it should be understood that the present invention may be embodied in the following forms.

The vehicle condition detector 72 may include a velocity sensor that detects the vehicle velocity. In this case, the controller 70 may use the detected velocity to determine whether the engine E is in the reversely driven state.

The vehicle condition detector 72 may include a brake pedal depression sensor that detects the depression of the brake pedal. In this case, the controller 70 may use the detected state of the brake pedal to determine whether the engine E is in the reversely driven state. For example, if the depression of the brake pedal is detected when the vehicle velocity is greater than a predetermined value, the controller 70 may determine that the engine E is in the reversely driven state.

The vehicle condition detector 72 may include a timer to measure the time in which the current duty ratio is continuously increased by step S104 of the routine illustrated in Fig. 4 or to measure the time in which the clutch mechanism C continuously connects the compressor to the engine E. In this case, when the measured time exceeds a predetermined period, the controller 70 returns the compressor to the minimum displacement state (in the first embodiment) or causes the clutch mechanism C to disconnect the compressor from the engine E (in the second embodiment). This prevents the duty ratio increase or the clutch connection from being continued for a long period of time and minimizes unnecessary cooling.

In the above embodiments, when the air conditioner switch 73 is turned off and the engine E is in a reversely driven state, the compressor is always shifted from the minimum displacement state to the non-minimum displacement state (first embodiment) or is always activated (second embodiment). However, such operations need not be performed if the time during which the compressor has been in the minimum displacement state is short (first embodiment) or the time during which the compressor has been deactivated (second embodiment) is short. For example, the vehicle condition detector 72 may include a timer to measure the time in which the minimum displacement state of the compressor continues (first embodiment) or to measure the time in which the clutch mechanism C continues to disconnect the compressor from the engine E (second embodiment). In this case, the controller 70 shifts the compressor from the minimum displacement state to the non-minimum displacement state (first embodiment) or activates the compressor (second embodiment) only when the measured time exceeds a predetermined period.

In the first embodiment, when the air conditioner switch 73 is turned off and the engine E is in a reversely driven state, the compressor is always shifted from the minimum displacement state to the non-minimum displacement state. However, for example, if the temperature increase of the compressor is not high, the compressor does not have to shift from the minimum displacement state to the non-minimum displacement state even if the air conditioner switch 73 is turned off and the engine E is in the reversely driven state. In this case, the vehicle condition detector 72 may include a temperature sensor that detects the temperature of the compressor or the temperature of the refrigerant in the compressor. The controller 70 shifts the compressor from the minimum displacement state to the non-minimum displacement state only when the detected temperature exceeds a predetermined temperature.

To aid engine braking, the amount of refrigerant discharged from the compressor per unit time may always be increased when the engine is in a reversely driven state regardless of whether the air conditioner switch 73 is turned on or off. Further, this improves the durability of the compressor without decreasing fuel efficiency of the engine E.

The control valve CV does not have to be a valve that variably sets the target suction pressure PS. For example, the control valve CV may be any kind of externally controlled valve, such as one that variably sets the target discharge pressure or an electromagnetic valve.

The present invention may be applied to a fixed displacement compressor that employs a swash plate or a wave-like cam in lieu of the swash plate. The present invention may also be applied to a scroll compressor having a fixed displacement.

The power source of the vehicle may be a motor.

The present examples and embodiments are to be considered as illustrative and not restrictive, and the invention is not to be limited to the details given herein, but may be modified within the scope and equivalence of the appended claims.

A controller (70) for improving the durability of a compressor employed in a vehicle air conditioner without decreasing engine fuel efficiency. The controller detects the driving conditions of the vehicle and determines whether the engine (E) is in a reversely driven state, in which vehicle wheels (W) drive the engine instead of the engine driving the wheels. The controller increases the amount of refrigerant discharged from the compressor when the engine is in the reversely driven state.

## Claims

1. A controller (70) of a compressor for a vehicle air conditioner, wherein the compressor is driven by a power source (E) that drives wheels (W) of a vehicle, the controller being **characterized by**:
a detecting means (72, 73, 76, 77) for detecting a driving condition of the vehicle;
a determining means (70) for determining whether the power source (E) is in a reversely driven state, in which the wheels drive the power source instead of the power source driving the wheels (W), based on the driving conditions detected by the detecting means; and
a controlling means (70) for increasing the amount of refrigerant discharged from the compressor per unit time when the determining means determines that the power source is in the reversely driven state.

2. The controller according to claim 1 **characterized in that** the compressor has a displacement that is variable between a minimum displacement state and a maximum displacement state, wherein the controlling means (70) increases the displacement of the compressor to increase the amount of refrigerant discharged from the compressor per unit time.

3. The controller according to claim 2 **characterized in that** the controlling means (70) shifts the displacement of the compressor from the minimum displacement state to a non-minimum displacement state, in which the displacement is not minimal, when the compressor is in the minimum displacement state and the power source (E) is in the reversely driven state.

4. The controller according to claim 3 **characterized in that** the compressor includes a suction chamber (21) for drawing in refrigerant from an external refrigerant circuit (30), a compression chamber (29) for drawing in the refrigerant from the suction chamber and compressing the refrigerant, a discharge chamber (22) for drawing in the compressed refrigerant from the compression chamber, and a crank chamber (5) connecting the suction chamber and the discharge chamber, wherein the suction chamber and the discharge chamber are connected to the external refrigerant circuit, the refrigerant circulates through the external refrigerant circuit, the displacement is varied by adjusting the pressure of the crank chamber, the displacement is close to zero when the compressor is in the minimum displacement' state, and the compressor stops circulating the refrigerant through the external refrigerant circuit and forms an internal refrigerant circuit (22, 5, 21, 29) in the. compressor that extends through the discharge chamber, the crank chamber, the suction chamber, and the compression chamber when the compressor is in the minimum displacement state.

5. The controller according to claim 1 **characterized in that** the compressor is connected to the power source (E) without a clutch mechanism.

6. The controller according to claim 1 **characterized in that** the compressor is connected to the power source (E) by a clutch mechanism (C), and the controlling means (70) connects the compressor to the power source with the clutch mechanism to activate the compressor and increase the amount of refrigerant discharged from the compressor per unit time when the compressor is disconnected from the power source by the clutch mechanism and the determining means determines that the power source is in the reversely driven state.

7. The controller according to claim 1 **characterized in that** the controlling means (70) increases the amount of refrigerant discharged from the compressor per unit time when an air conditioner switch (73) for operating the vehicle air conditioner is turned off and the power source is in the reversely driven state.

8. The controller according to claim 1 **characterized in that** the detecting means (72) includes an acceleration pedal depression sensor (76) for detecting a depression amount of an acceleration pedal of the vehicle, and the determining means (70) determines whether the power source (E) is in the reversely driven state based on the depression amount detected by the acceleration pedal depression sensor.

9. The controller according to claim 1 **characterized in that** the detecting means (72) includes a speed sensor (77) for detecting the speed of the power source (E), and the determining means (70) determines whether the power source is in the reversely driven state based on the speed detected by the speed sensor.

10. The controller according to claim 1 **characterized in that** the vehicle air conditioner uses carbon dioxide as the refrigerant.

11. A method for controlling a compressor of a vehicle air conditioner, wherein the compressor is driven by a power source (E) that drives wheels (W) of a vehicle, the method being **characterized by** the steps of:
detecting a driving condition of the vehicle;
determining whether the power source is in a reversely driven state, in which the wheels (W) drive the power source (E) instead of the power source driving the wheels, based on the driving conditions detected in the detecting step; and
increasing the amount of refrigerant discharged from the compressor per unit time when the power source is in the reversely driven state.

12. The method according to claim 11 being **characterized in that** the compressor has a displacement that is variable between a minimum displacement state and a maximum displacement state, wherein the increasing step includes increasing the displacement of the compressor.

13. The method according to claim 12 being **characterized in that** the increasing step includes shifting the displacement of the compressor from the minimum displacement state to a non-minimum displacement state, in which the displacement is not minimal, when the compressor is in the minimum displacement state and the power source is in the reversely driven state.

14. The method according to claim 11 being **characterized in that** the compressor is connected to the power source (E) by a clutch mechanism (C), and the increasing step includes connecting the compressor to the power source with the clutch mechanism to activate the compressor when the compressor is disconnected from the power source by the clutch mechanism.

15. The method according to claim 11 being **characterized in that** the increasing step is performed when an air conditioner switch (73) for activating the vehicle air conditioner is turned off and the power source (E) is in the reversely driven state.

16. The method according to claim 11 being **characterized in that** the detecting step includes detecting a depression amount of an acceleration pedal of the vehicle, and the determining step includes determining whether the power source (E) is in the reversely driven state based on the depression amount detected in the depression amount detecting step.

17. The method according to claim 11 being **characterized in that** the detecting step includes detecting the speed of the power source, and the determining step includes determining whether the power source (E) is in the reversely driven state based on the speed detected in the speed detecting step.
